# EUROPEAN PATENT APPLICATION

(11) **EP 2 784 334 A1**
(43) Date of publication of application: **01.10.2014**
(21) Application number: 13160800.2
(22) Date of filing: 25.03.2013
(51) Int. Cl.: F16B 5/06, F16B 35/04, F16B 37/02, F24F 13/02

(54) **A fastening member and a system for joining insulation panels**

(71) Applicant: Rockwool International A/S, 2640 Hedehusene (DK)
(72) Inventor: Andersen, Poul Høg, 2750 Ballerup (DK); Pedersen, Kurt Munk, 4140 Borup (DK)
(74) Representative: Høiberg A/S

(57) **Abstract**

The present invention concerns a fastening member and a system of insulation panels mounted around a building structure, such as a ventilation duct or the like, wherein two insulation panels adjacent each other are joined by at least one fastening member by manually inserting the at least one fastening member into the insulation panels, said fastening member having an insertion end and a head end, wherein the fastening member is made of an elongated strip of sheet material having a longitudinal axis and which is twisted around its longitudinal axis.

## Description

The present invention relates to a fastening member for joining two insulation panels by manually inserting the fastening member into the insulation panels, said fastening member having an insertion end and a head end.

In many situations, it is desired or even necessary to fasten insulating panels or insulation boards to each other. In order to thermally insulate and thereby providing a fire-retarding protection of a building structure, insulating boards are mounted e.g. around ventilation ducts or profiles, such as load-bearing profiles. This often requires the use of glue or other fastening means for fastening the insulating panels to each other and to the surface of the building structure.

It is a requirement in many places that ventilation ducts and the like are insulated against fire so that the insulating layer can withstand fire for a certain time and thereby keep the temperature of profiles of steel under the point of softening or prevent heat from inside a ventilation duct to spread to the outside of the duct. In such situations the critical areas are where the insulating panels meet and it is necessary to fasten the insulating panels to each other around the duct or profile to provide safe fire insulation around the ducts or profiles.

Particularly, it is desired to fasten the insulating panels to each other in the corner assemblies around the ducts, pipes or profiles to prevent gaps in insulation from occurring, for example if the steel duct expands due to heat.

SE-C2-507549 discloses a fastening element and a method of fastening such insulating panels to each other. This fastening element is in the form of a helix-shaped screw composed of a helix-formed head and a helix-formed wire.

The helix-shaped screw is screwed into the insulating materials to be joined together. The joint provided by use of this helix-shaped screw is generally acceptable.

These helix-shaped screws are needed in large quantities when mounting the insulating panels in a building structure and normally the screws are supplied in a large quantity in a box or a bag, and due to the shape of the helix-shaped screws they get tangled into each other and are difficult to separate and thereby single out one at the time when the screws are to be mounted. Furthermore, the shape of the helix-shaped screw also makes it difficult and time-consuming to mount. Particularly, it is found disadvantageous that several turns of the helix screw must be applied in order to ensure the two boards are well secured to each other and a sufficient pull-out resistance is ensured. An electrically driven hand-held tool is normally used for mounting of the helix-shaped screws.

From WO 02/061217 A1 there is known, an L-shaped nail for fixing two pieces of insulation material units together. Also in this case a hand-held tool is required to precut a slit in the insulating material and for rotating the L-shaped nail once inserted in the slit. Although this might be easier than the mounting of the helix-shaped screw mentioned above it is found to be suitable primarily in relation to the mounting of insulation boards with relative a small thickness, such as 20-30 mm.

Further to these known fastening systems for joining insulation panels or boards, it is an object of the present invention to provide a means of securing thermal and/or fire protecting insulation boards to each other to prevent gaps from appearing heat expansion or due to inaccurate cutting of the boards or the like. It is further an object to ensure an easy installment of the fastening means to facilitate the total mounting of the insulation boards.

To achieve this object, there is provided a fastening member for joining two insulation panels by manually inserting the fastening member into the insulation panels, said fastening member having an insertion end and a head end, wherein the fastening member is made of an elongated strip of sheet material having a longitudinal axis and which is twisted around its longitudinal axis.

Since the fastening member is made of sheet material it can easily be screwed into the insulation boards by manually forcing the fastening member by hand into the insulation, and the flat shape of the sheet material and the twist ensures that the fastening member has a high pull-out resistance.

Preferably, at the head end the fastening member is provided with a bended protion, the bended portion preferably being bended approx. 90º in relation to the longitudinal axis. This flat, bended portion at the head end functions as a push and turn handle during the insertion of the fastening member. After the mounting or insertion, the bended portion is visible on the outside of the insulation board so it can be clearly seen that the fastening member is indeed mounted.

Preferably, the sheet material is twisted between 90º and 360º, preferably 180º, i.e. half a turn, around the longitudinal axis. This twist is advantageously found sufficient in order to establish the required pull out resistance whilst at the same time also ensures an easy manual insertion as the fastening member does not rotate too much when being manually pressed into the mineral wool insulation.

In a preferred embodiment, the insertion end of the fastening member is pointed. This may facilitate a more accurate point of insertion of the fastening member. However, it is by the invention realised that a plain blunt insertion end may also be used.

In a preferred embodiment, the sheet material has a thickness of 0.6-1.2 mm, preferably approx. 0.7-0.8 mm. Hereby a conventional plate material, such as steel, can be used. This ensures that the fastening member is inexpensive to produce. Due to the small thickness of the fastening member only a relatively small force is required to press the fastening member into the insulating material. Thus, only low forces are exerted on the fastening member, and there is no requirement that the sheet material needs to be hardened or reinforced in other ways.

The fastening member may have a length which corresponds to approximately twice the thickness of the insulation panels which it is intended to interconnect. Generally, it has been found that the width to length ration of the strip of sheet material from which the fastening member is formed may be between 1:4 and 1:8, preferably approx. 1:6.

In a second aspect of the invention there is provided a system of insulation panels mounted around a building structure, such as a ventilation duct or the like, wherein at least two insulation panels adjacent each other are joined by at least one fastening member by manually inserting the at least one fastening member into the insulation panels, said fastening member having an insertion end and a head end, wherein the fastening member is made of an elongated strip of sheet material having a longitudinal axis and which is twisted around its longitudinal axis.

Preferably, the insulation panels are made of mineral wool fibres, and preferably with a density of 30-250 kg/m³, more preferably with a density of 50-200 kg/m³, most preferably 70-180 kg/m³. This makes the invention advantageous in relation to fire protection of building structures, such as steel guiders, ventilation ducts, etc.

According to an embodiment of the invention, the fastening member has a length which corresponds to approximately twice the thickness of the insulation panels. Thus, if the thickness of the insulation panels is 60 mm the length of the fastening member should be approx. 120 mm. In such case the strip of sheet material could have a width of 10-30 mm, such as 20 mm. It has been found that good fire protection is achievable with the thickness of the insulation panels being 40-100 mm, preferably 60-80 mm. Therefore, the length of the fastening member is often 80-200 mm preferably 120-160 mm.

The invention is described in more detail with reference to the accompanying drawings, in which:
- Fig. 1: is a schematic perspective view of a fastening member according to an embodiment of the invention;
- Fig. 2: is a schematic cross-sectional view of a ventilation duct fitted with an insulation system according to an embodiment of the invention; and
- Fig. 3: is a top view of an elongated strip of sheet material for forming a fastening member according to an embodiment of the invention.

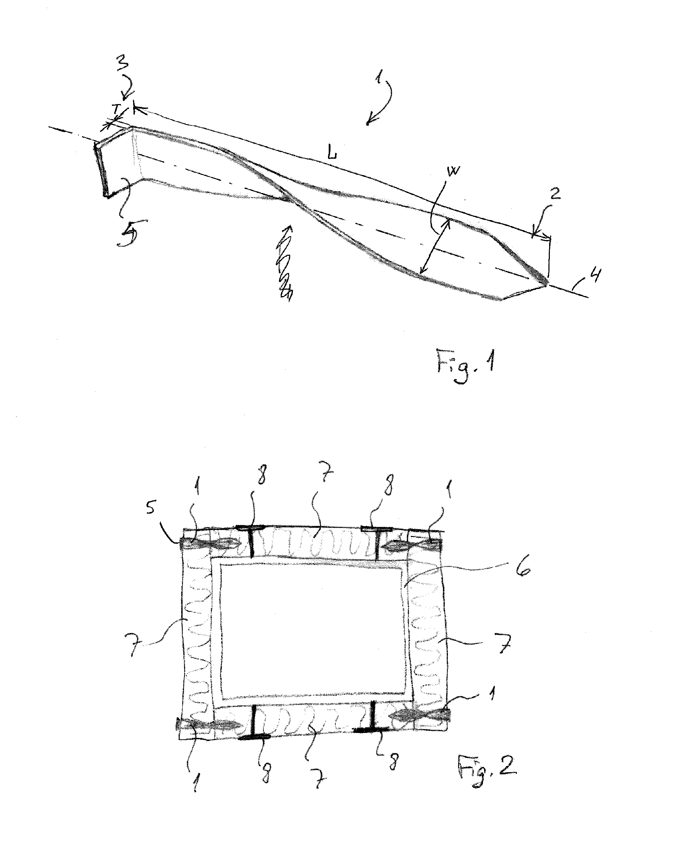

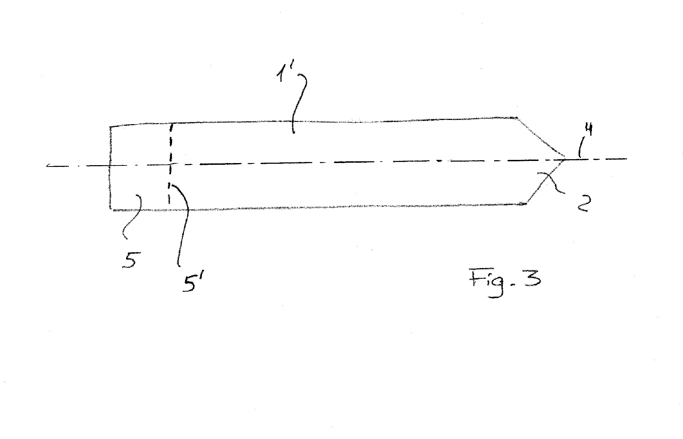

In fig. 1 there is shown an embodiment of a fastening member 1 according to the invention. The fastening member 1 is made from an elongated strip of metal 1' (see fig. 3) which has an insertion end 2 and a head end 3 and which is twisted about half a turn between said ends 2, 3 around a longitudinal axis 4. The twisting angle is preferably identical over the full length L of the fastening member, even though it might vary slightly. The insertion end 2 is preferably formed as a pointed end 2 as shown in the figures. A bended portion 5 is formed at the head end 3 by bending the end of the elongated strip 1' around the folding line 5' (see fig. 3) to a substantially perpendicular position relative to the longitudinal axis 4 and the rest of the strip 1'.

The fastening member 1 is found particularly advantageous in relation to corner connections between fire protection mineral wool insulation boards or panels 7, such as shown in fig. 2. One of the issues with the connection between the fire protection boards 7 at the corners of a ventilation duct 6 is to ensure that no gaps appear due to for instance inaccurate cutting of the boards and/or to prevent gaps to appear due to heat expansion of the steel duct 6 which the fire protection boards 7 are arranged around. The fire protection insulation boards 7 may be fitted to the surface of the duct 6 by heat-resistant glue and/or welding pins 8. However, at the corner assemblies there may still be a problem if the two insulation boards 7 adjacent each other provide a gap in the insulation. In order to overcome this, fastening members 1 according to the invention are provided in order to secure the corner assembly of the insulation boards 7.

The elongated strip is preferably cut out of a steel plate, e.g. a 0.7-0.8 mm steel plate. The preferred thickness T can vary depending on the choice of material between 0.6-1.2 mm. A preferred choice of material is steel since it is well suited to fire protection systems and is readily available and reasonably priced. However, other materials may be used under the circumstances, such as plastic or the like depending on how thermo-resistant the fastening members need to be.

The width W of the fastening member 1 may be chosen to fit a specific use. When the insulation boards or panels 7 are made of mineral wool a width W between 10 and 30 mm, such as 20 mm has shown to be suitable. With this dimension it is relatively easy to push the fastening member 1 into the insulation boards 7 by hand.

By the fastening members 1 according to the shown embodiment of the invention, it is found advantageous that the twist is about half a turn or 180º around the longitudinal axis 4. However the amount of twist can be more or less than this as long as it is sufficient to establish a good pull-out resistance in a given application. The twist is preferably constant over the full length L, even though he twisting angle by increase from one end of the fastening member to the other end.

The bended portion 5 at the head end 3 of the fastening member 1 functions as a push and turn handle during the mounting which can be done manually without use of a tool. After mounting the flat bended portion 5 is visible on the outside of the fire protection mineral wool fibre boards 7 so that it can be visibly controlled that the fastening member 1 has been mounted.

The fastening member 1 is made of a thin, flat piece of sheet metal. This strip of sheet metal is elongated with a width-to-length ratio of between 1:4 and 1:8, more preferably 1:6. It has turned out that this ensures a sufficient pull-out resistance with a twist of less than a full turn, preferably only half a turn. The relative wide blade-like twist of a thin, flat strip of sheet material, unlike e.g. a screw with a tread of several revolutions, ensures this fastening member 1 its pull-out resistance whilst at the same time ensures that it is easy to mount in the insulation boards, and is therefore particularly useful in the application of interconnecting mineral insulation boards, such as described above.

## Claims

1. A fastening member for joining two insulation panels by manually inserting the fastening member into the insulation panels, said fastening member having an insertion end and a head end, **characterised in that** the fastening member is made of an elongated strip of sheet material having a longitudinal axis and which is twisted around its longitudinal axis.

2. A fastening member according to claim 1, wherein at the head end the fastening member is provided with a bended portion, the bended portion preferably being bended approx. 90º in relation to the longitudinal axis.

3. A fastening member according to claim 1 or 2, wherein the sheet material is twisted between 90º and 360º, preferably 180º, around the longitudinal axis.

4. A fastening member according to any of the preceding claims, wherein the insertion end is pointed.

5. A fastening member according to any of the preceding claims, wherein the sheet material has a thickness of 0.6-1.2 mm, preferably approx. 0.7-0.8 mm.

6. A fastening member according to any of the preceding claims, wherein the sheet material is steel.

7. A fastening member according to any of the preceding claims, wherein the elongated strip of sheet material from which the fastening member is formed has a width-to-length ration of between 1:4 and 1:8, preferably approx. 1:6.

8. A system of insulation panels mounted around a building structure, such as a ventilation duct or the like, wherein at least two insulation panels adjacent each other are joined by at least one fastening member by manually inserting the at least one fastening member into the insulation panels, said fastening member having an insertion end and a head end, **characterised in that** the fastening member is made of an elongated strip of sheet material having a longitudinal axis and which is twisted around its longitudinal axis.

9. A system according to claim 8, wherein the insulation panels are mineral wool panels, preferably with a density of 30-250 kg/m³, more preferably 50-200 kg/m³, most preferably 70-180 kg/m³.

10. A system according to claim 8 or 9, wherein the fastening member has a length which corresponds to approximately twice the thickness of the insulation panels.

11. A system according to any of claims 8 to 10, wherein the thickness of the insulation panels is 40-100 mm, preferably 60-80 mm, and the length of the fastening member is 80 to 200 mm, preferably 120-160 mm.

12. A system according to any of claims 8 to 11, wherein the fastening member is according to any of the claims 1 to 7.
